(19) **Europäisches Patentamt / European Patent Office / Office européen des brevets**

(11) **EP 2 303 694 B1**

(12) **FASCICULE DE BREVET EUROPEEN**

(45) Date de publication et mention
de la délivrance du brevet:
**30.01.2013 Bulletin 2013/05**

(21) Numéro de dépôt: **09740351.3**

(22) Date de dépôt: **21.07.2009**

(51) Int Cl.:
***B64D 31/12*** *(2006.01)*

(86) Numéro de dépôt international:
**PCT/FR2009/051463**

(87) Numéro de publication internationale:
**WO 2010/010292 (28.01.2010 Gazette 2010/04)**

(54) **AERONEF COMPRENANT AU MOINS UN MOTEUR A ROTORS CONTRAROTATIFS**

FLUGZEUG MIT MINDESTENS EINEM GEGENLÄUFIGE ROTOREN AUFWEISENDEN TRIEBWERK

AIRCRAFT INCLUDING AT LEAST ONE ENGINE HAVING COUNTER-ROTATING ROTORS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **24.07.2008 FR 0855062**

(43) Date de publication de la demande:
**06.04.2011 Bulletin 2011/14**

(73) Titulaire: **Airbus Operations
31000 Toulouse (FR)**

(72) Inventeurs:
• **SAUCRAY, Jean Michel
F-45560 SAINT DENIS EN VAL (FR)**
• **CHAREYRE, Philippe
F-31880 La Salvetat Saint Gilles (FR)**

(74) Mandataire: **Potdevin, Emmanuel Eric
Cabinet Lhermet la Bigne & Remy
11 boulevard de Sébastopol
75001 Paris (FR)**

(56) Documents cités:
**EP-A- 1 296 082       WO-A-2008/079431
GB-A- 2 275 984**

**Description**

L'invention concerne les aéronefs comprenant au moins un moteur à rotors contrarotatifs.

Il peut s'agit d'un moteur à hélices contrarotatives tel qu'un turbopropulseur de type propfan, ou encore d'un moteur d'aéronef à voilure tournante tel qu'un hélicoptère.

Dans l'industrie du transport aérien, on cherche depuis longtemps à atténuer les vibrations et le bruit produits par les moteurs. Les techniques à ce sujet sont de différents types.

On connaît ainsi des techniques d'équilibrage passif ou actif dans lesquelles on mesure le balourd inertiel ou aérodynamique et on le corrige, comme c'est le cas par exemple dans le document WO-2006/017201.

On connaît d'autre part des techniques dites de synchrophasage entre plusieurs moteurs qui permettent de limiter le bruit généré à la fréquence de passage de pales comme c'est le cas par exemple dans les documents US-4 689 821, US-2005/0065712, WO-2005/042959 et US-00/5221185. Le principal problème avec ces techniques d'équilibrage et de synchrophasage par la chaîne de commande des moteurs est que le délai de la chaîne de commande doit être très inférieur à la période séparant le passage de deux pales devant le capteur utilisé. Or ce n'est jamais le cas, de sorte qu'aucune application industrielle n'est envisageable.

On connaît par ailleurs des techniques pour filtrer et atténuer les vibrations générées dans l'aéronef. Il s'agit par exemple de systèmes actifs ou semi-actifs à masses actives, à raideur variable, ou à fluides rhéologiques (comme décrit dans le document US-5 490 436). Ces techniques comprennent également des systèmes munis de capteurs et d'architectures de contrôle permettant de commander des actions actives ou semi-actives. Ces techniques ont été développées pour limiter l'impact des forces de balourd sur la structure porteuse.

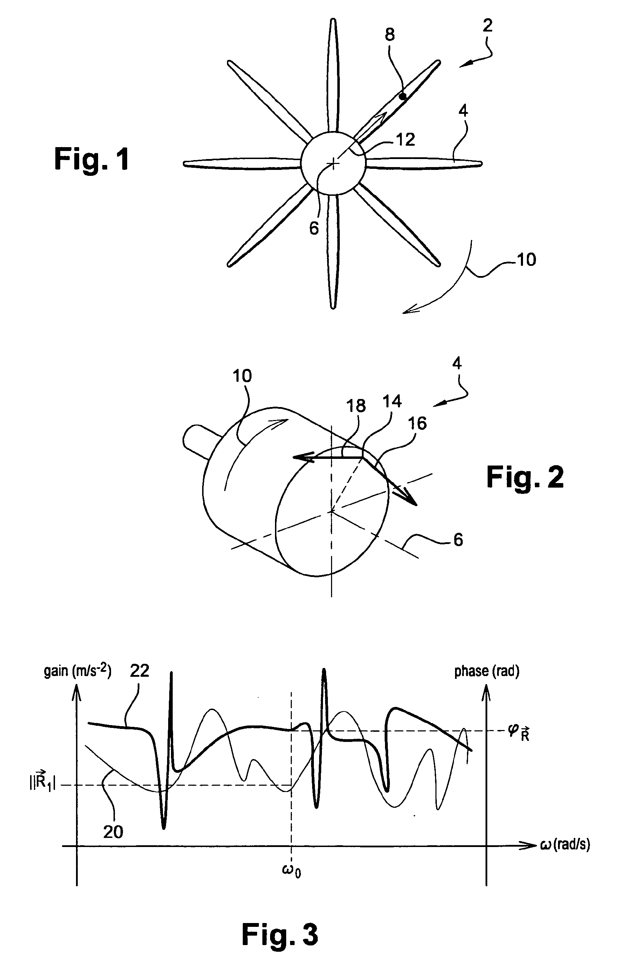

En référence à la figure 1, nous allons tout d'abord décrire le problème du balourd pour un disque unique en rotation. Sur cette figure, on a illustré un disque formant une hélice 2 comprenant des pales 4 ici au nombre de huit. L'hélice est montée mobile en rotation autour d'un axe 6 correspondant à son axe géométrique de symétrie principal. On suppose que l'hélice comprend un défaut d'équilibrage tel que le centre de gravité de l'hélice ne se trouve pas sur l'axe 6 mais est déporté radialement de ce dernier. Ce centre de gravité 8 est par exemple situé sur l'une des pales 4, comme cela a été indiqué de façon exagérée sur la figure 1. On suppose que l'hélice est mue en rotation autour de son axe 6 dans le sens indiqué par la flèche 10. Le centre de gravité 8 engendre alors une force de balourd 12 qui s'exerce sur l'hélice au niveau de l'axe 6 dans le plan du disque suivant une direction radiale vers l'extérieur et passe par le point 8. Cette force tourne dans le sens 10. Il s'agit d'un balourd d'inertie. Ainsi pour tout disque en rotation dont le centre d'inertie ne coïncide pas avec le centre de rotation, un balourd d'inertie produit une force radiale dans le plan du disque comme illustré sur la figure 1.

En référence à la figure 2, il peut exister également un balourd d'origine aérodynamique. C'est le cas lorsque le disque en mouvement comprend des surfaces portantes comme les faces des pales d'une hélice. Ainsi, un défaut de calage des surfaces portantes ou un défaut de forme de ces surfaces peut engendrer un balourd aérodynamique. Il peut aussi s'agir d'un problème de dispersion de la déformation aérodynamique des pales ou de dispersion du pas des pales. La force de balourd aérodynamique s'exerce à un point 14 situé à distance de l'axe 6. La force de balourd se décompose d'une part en un incrément de force de traction référencé 16 sur la figure 2 et situé hors du plan du disque d'hélice, et un incrément de force de traînée 18 se trouvant dans le plan du disque d'hélice.

On va maintenant présenter plus en détail certaines techniques d'équilibrage. On sait en effet mesurer les forces de balourd d'une machine tournante (ou d'un disque en rotation) en distinguant l'amplitude et l'angle de phase de la force par rapport à un axe fixe. L'une de ces techniques est par exemple la suivante. En vue d'éliminer les vibrations à une vitesse de rotation spécifique, on mesure d'abord les caractéristiques de balourd de la machine tournante. Pour cela, on mesure ou on calcule les forces de balourd qu'elle produit. Ces forces sont caractérisées par une excitation sinusoïdale dans le domaine de fréquence du régime du moteur dans un repère de référence fixe par rapport à la partie tournante, par exemple lié à la structure porteuse. Ces excitations sont en général mesurées au moyen d'un capteur des vibrations du moteur (un accéléromètre par exemple) ou par un jeu d'accéléromètres dédiés. On représente ainsi le balourd d'un disque rotatif au moyen de l'accélération mesurée R1 en termes d'amplitude (gain) et de phase ($\varphi$) dans l'axe de la structure porteuse fixe à la vitesse de rotation $\omega_o$ de la machine comme illustré à la figure 3. Cette dernière montre sur une première courbe 20 l'évolution du gain (en m/s$^{-2}$) en fonction de l'évolution de la vitesse de rotation $\omega$ (en rad/s), ainsi que sur la deuxième courbe 22 l'évolution de la phase $\varphi$ (en radians) en fonction de l'évolution de cette vitesse.

On peut utiliser la méthode de mesure suivante appelée méthode des coefficients d'influence des vecteurs. Après avoir mesuré l'accélération initiale R1, qui constitue le résultat de l'action du balourd recherché, on ajoute au système tournant des masselottes de balourd connues en vue de mesurer leur influence sur l'accélération mesurée. Par exemple, un balourd de valeur unitaire est ajouté sur le disque à l'angle de phase 0° et une nouvelle accélération R2 (gain et phase) à la vitesse $\omega_o$ est mesurée.

On calcule ensuite une solution vectorielle de la façon suivante :

- le balourd d'origine b1 conduit à l'accélération R1,
- l'ensemble (b1 + b2) formant la somme du balourd d'origine et du balourd unitaire conduit à une accélération R2,
- le balourd unitaire b2 est donc par déduction générateur de l'accélération R2-R1.

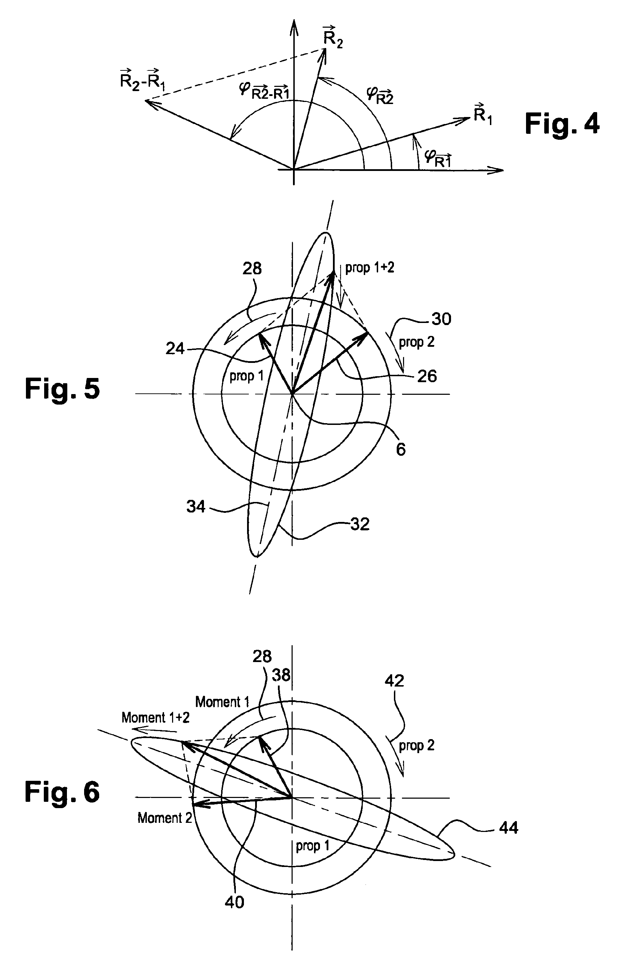

On renvoie à ce sujet à la figure 4 sur laquelle on a illustré dans un repère orthonormé les vecteurs R1, R2 et R2 - R1 qui ont respectivement des phases φR1, φR2 et φ(R2 - R1).

On note ici au passage que cette méthode de calcul suppose qu'il existe une relation linéaire entre le balourd et l'accélération correspondante mesurée.

Le calcul du balourd d'origine (et de la masse de correction nécessaire en conséquence) se fait alors de la façon suivante :

$$\begin{cases} \left\| \vec{b}_1 \right\| = \left\| \vec{b}_2 \right\| \cdot \dfrac{\left\| \vec{R}_1 \right\|}{\left\| \vec{R}_2 - \vec{R}_1 \right\|} \\ \varphi_{\vec{b}_1} = \varphi_{\vec{b}_2} + \varphi_{\vec{R}_1} - \varphi_{\vec{R}_2 - \vec{R}_1} \end{cases}$$

Pour obtenir des résultats affinés et minimiser les erreurs de mesure, on peut effectuer plusieurs étapes d'ajout de masselotte et de mesure d'accélération, avec des accélérations R3 et R4 par exemple.

Au passage, on indique que les balourds d'origine inertielle et d'origine aérodynamique peuvent devoir être mesurés séparément. La technique précitée peut être utilisée pour cela moyennant en outre des modifications de la vitesse de rotation et des modifications indépendantes de la demande de couple afin de distinguer la source de balourd venant de l'inertie et la source de balourd due aux caractéristiques aérodynamiques du rotor.

De même, lorsque la machine tournante comprend deux rotors ou plus, la même approche peut être reproduite pour chaque disque de rotor l'un après l'autre. Des logiciels de diagnostic de balourd fournissent alors des vecteurs de solution de l'équilibrage qui comprennent un vecteur de solution pour le premier rotor et un vecteur de solution pour le second rotor. Chaque vecteur de solution comprend un module et un angle de phase. Cette opération sera effectuée pour la caractérisation du balourd inertiel et ensuite pour la caractérisation du balourd aérodynamique.

On va maintenant présenter en référence à la figure 5 le problème du balourd de deux disques contrarotatifs. De même que pour un disque unique, en présence de deux disques contrarotatifs, le balourd d'inertie de chacun des disques produit une force radiale dans le plan du disque correspondant. Sur la figure 5, ces forces PROP1 24 et PROP2 26 ont été illustrées et s'exercent à l'axe de rotation 6 commun aux deux disques. Les deux disques tournent dans des sens de rotation différents respectivement indiqués 28 et 30 sur la figure 5. Les forces de balourd 24 et 26 tournent également dans des sens de rotation opposés l'un de l'autre, respectivement 28 et 30.

On considère maintenant la force PROP 1 + 2 résultant de la somme des deux forces de balourd PROP1 et PROP2 telle qu'elle est observée depuis le carter de la machine tournante ou sa structure porteuse. Le module de cette force résultante varie en fonction de la position relative des disques. Ce module décrit dans le temps une ellipse 32 centrée sur l'axe 6, ayant un petit axe égal à la différence entre les modules des forces PROP1 et PROP2 et un grand axe 34 égal à la somme des deux modules.

On considère maintenant le cas particulier dans lequel les modules des deux forces PROP1 et PROP2 sont égaux. Dès lors, le petit axe de l'ellipse a une longueur nulle et la force résultante PROP 1 + 2 est égale à la somme des modules des deux forces, ce qui en fait une pure force de secousse oscillatoire. L'ellipse se réduit donc à un segment. Par exemple, si on suppose que la phase φ égale 0 lorsque les deux forces radiales PROP1 (ou $R_{disque1}$) et PROP2 (ou $R_{disque2}$) sont en phase, la force radiale résultante R se présente comme suit :

$$R(\omega t) = R_{disque1}(\omega t) + R_{disque2}(\omega t)$$

$$R(\omega t + \pi / 2) = R_{disque1}(\omega t + \pi / 2) - R_{disque2}(\omega t + \pi / 2)$$

$$R(\omega t + \pi) = -[R_{disque1}(\omega t) + R_{disque2}(\omega t)]$$

$$R(\omega t + 3\pi / 2) = R_{disque2}(\omega t + 3\pi / 2) - R_{disque1}(\omega t + 3\pi / 2)$$

Par ailleurs, le moment résultant M en dehors du plan se présente comme suit:

$$M(\omega t) = 0$$

$$M(\omega t + \pi / 2) = [R_{disque1}(\omega t) + R_{disque2}(\omega t)] * brasdelevier$$

$$M(\omega t + \pi) = 0$$

$$M(\omega t + 3\pi / 2) = -[R_{disque1}(\omega t) + R_{disque2}(\omega t)] * brasdelevier$$

Le moment situé hors du plan est exprimé au centre du disque 1 par exemple. De plus, le bras de levier est la distance axiale entre les plans des disques 1 et 2.

La direction du grand axe de l'ellipse est fonction de la phase relative entre les forces de balourd PROP1 et PROP2. Par exemple, si la position des deux disques est telle que les deux forces sont en phase dans l'axe vertical, l'excitation maximale dans le plan des disques sera orientée dans la direction verticale. A l'opposé, si la position des deux disques est telle que les deux forces sont en opposition de phase (décalage de 180°) dans la direction verticale, l'excitation maximale dans le plan des disques aura lieu dans la direction horizontale.

Lorsque les deux disques contrarotatifs incorporent des surfaces portantes aérodynamiques, les forces situées hors des plans des disques engendrent des moments passant par le centre de rotation de chaque disque. Dès lors, tout comme dans le cas du balourd d'inertie, le principe de la sommation vectorielle décrit pour les forces radiales est applicable pour les moments générés par les forces de balourd aérodynamiques comme on l'a illustré à la figure 6. Sur cette dernière, on distingue ainsi le Moment 1 référencé 38 associé au disque 1 tournant dans le sens 28 et le Moment 2 référencé 40 associé au disque 2 et tournant dans le sens 42. La somme vectorielle Moments 1 + 2 des deux moments décrit une ellipse 44.

Qu'il s'agisse de balourd inertiel ou de balourd aérodynamique, lorsque les deux disques tournent à la même vitesse, le grand axe de l'ellipse reste fixe par rapport à un axe fixe correspondant par exemple a la structure porteuse du moteur. A l'inverse, si les vitesses de rotation des disques ne sont pas les mêmes, l'axe de l'ellipse tourne à une vitesse égale à la différence de vitesse entre les deux disques.

Il faut ici relever qu'en complément des forces tournantes situées en dehors du plan des disques, des moments locaux sont générés entre les deux plans des disques. Les modules de ces moments dépendent de la distance entre les deux disques tournants.

Le document EP-A-1 296 082 divulgue un aéronef selon le préambule de la revendication 1.

Les techniques connues de réduction des vibrations s'avèrent toutefois peu efficaces, notamment dans le cadre des moteurs à rotors contrarotatifs.

Un but de l'invention est de réduire les vibrations générées dans la structure porteuse par de tels moteurs.

A cet effet, on prévoit selon l'invention un aéronef selon la revendication 1.

Ainsi, on fait en sorte que les vibrations produites par le ou chaque moteur soient orientées principalement dans une direction dans laquelle elles seront perçues le moins possible à l'emplacement, par exemple depuis le fuselage. On ne cherche donc pas à les diminuer à la source. On réduit ainsi les vibrations perçues de façon simple et économique en énergie. Contrairement aux techniques de l'art antérieur, l'invention prend en compte les caractéristiques des moteurs, notamment par le choix de la direction du grand axe de l'ellipse. Elle ne nécessite pas l'apport de masses additionnelles (de type *tuned vibration absorbers)* comme les techniques de filtrage ou de dissipation connues, ni l'introduction dans le moteur d'énergie extérieure spécifique pour la mise en oeuvre d'une fonction active. Les vibrations pourront être minimisées à un seul emplacement, plusieurs emplacements à la fois (au moyen de plusieurs capteurs respectifs par exemple) ou encore dans tout une zone correspondant par exemple à un composant complet de l'aéronef tel que le fuselage.

Dans un mode de réalisation, les moyens de commande sont aptes à commander le moteur ou l'un au moins des moteurs de sorte que le grand axe de l'ellipse ou de l'une au moins des ellipses s'étend dans une direction de plus faible transmissibilité des vibrations dans une structure portant le moteur.

Ainsi, une fois identifiée la direction de plus faible transmissibilité des vibrations dans la structure, on fait en sorte que les vibrations soient concentrées dans cette direction. Elles peuvent ainsi être amorties très efficacement.

Dans un autre mode de réalisation, les moteurs sont au nombre de deux au moins et les moyens de commande sont aptes à commander les moteurs de sorte qu'une résultante des vibrations générées par les moteurs a une intensité minimale à l'emplacement prédéterminé.

Ainsi, ce sont les vibrations globales générées par au moins deux des moteurs ou les deux moteurs qui sont traitées ensemble afin de minimiser leur intensité.

Dans un autre mode de réalisation, les moteurs sont au nombre de deux au moins et les moyens de commande sont aptes à commander au moins l'un des moteurs de sorte que des vibrations générées par le moteur en propre ont une intensité minimale à l'emplacement.

Avantageusement, l'emplacement est propre au moteur et les moyens de commande sont aptes à commander l'autre moteur de sorte que l'autre moteur est associé à au moins un autre emplacement prédéterminé auquel des vibrations générées par cet autre moteur en propre ont une intensité minimale.

Cette fois, on procède à l'atténuation des vibrations pour chaque moteur en propre. Les moteurs sont donc traités indépendamment les uns des autres à cet égard.

Dans un autre mode de réalisation, les moyens de commande sont aptes à commander le moteur ou l'un au moins des moteurs de sorte que des forces de balourd des rotors s'exercent parallèlement à un plan d'inertie d'une structure portant le moteur, par exemple un plan d'inertie principal ou celui des plans d'inertie qui a le plus grand module d'inertie.

De la sorte, on minimise l'impact des vibrations au sein de l'aéronef.

Dans un autre mode de réalisation, les moteurs sont au nombre de deux au moins et les moyens de commande sont aptes à commander les moteurs de sorte que des forces de balourd et/ou des moments de balourd des moteurs respectifs s'exerçant sur l'aéronef se compensent au moins partiellement.

Ainsi, cette compensation permet également d'atténuer les vibrations.

On prévoit également selon l'invention un procédé de commande selon la revendication 8.

On prévoit encore selon l'invention un programme d'ordinateur qui comprend des instructions aptes à commander l'exécution d'un procédé selon l'invention lorsqu'il est exécuté sur un ordinateur, et un support d'enregistrement de données qui comprend un tel programme.

D'autres caractéristiques et avantages de l'invention apparaîtront encore dans la description suivante de modes de réalisation donnés à titre d'exemples non limitatifs en référence aux dessins annexés sur lesquels :

- les figures 1 et 2 sont deux vues respectivement de face et en perspective d'un disque tournant de l'art antérieur ;
- la figure 3 illustre l'évolution du gain et de la phase d'une force de balourd en fonction de la vitesse du disque tournant de la figure 1 ;
- les figures 4 à 6 sont des diagrammes illustrant sous forme vectorielle des forces de balourd dans le disque de la figure 1 ;
- les figures 7 et 8 sont deux vues schématiques en élévation d'un aéronef illustrant deux modes de réalisation de l'invention respectivement ; et
- les figures 9, 10 et 11 sont des schémas illustrant différents modes de réalisation de l'architecture de commande des moteurs dans les aéronefs des figures 7 et 8.

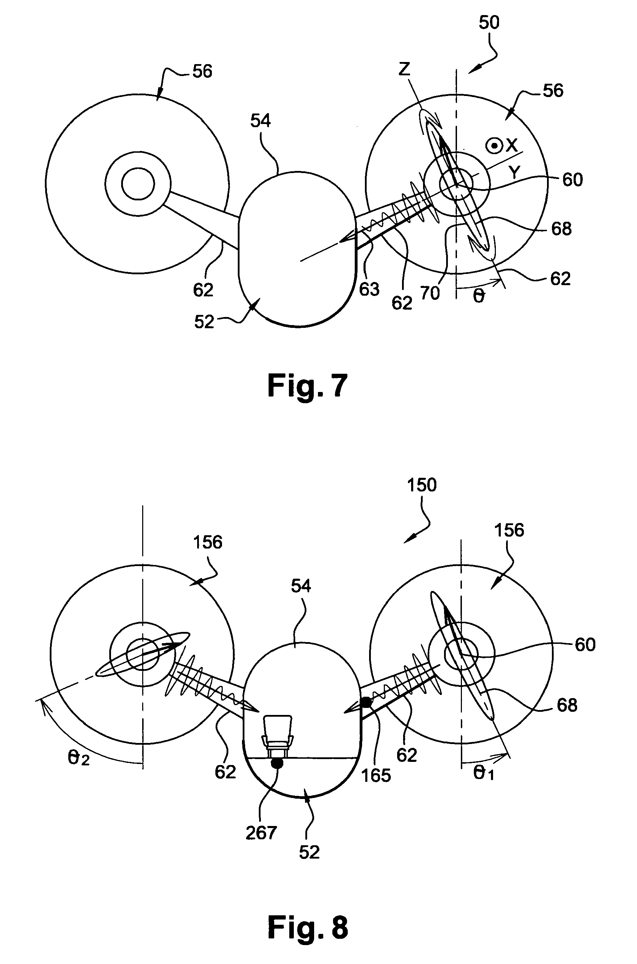

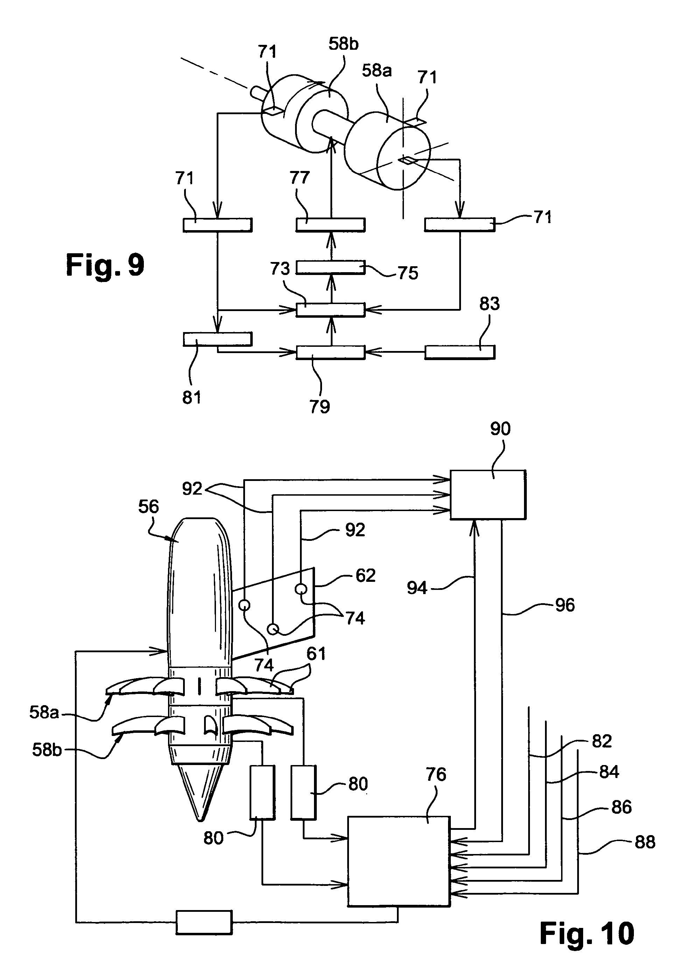

En référence à la figure 7, dans un premier mode de réalisation de l'invention, l'aéronef 50 comprend une structure principale 52 comportant notamment un fuselage 54. On suppose que, dans le présent exemple, l'aéronef comprend des moteurs 56, en l'espèce au nombre de deux, disposés symétriquement par rapport à un plan vertical médian du fuselage 54. Chaque moteur 56 est en l'espèce un turbopropulseur de type propfan comprenant deux hélices contrarotatives respectivement référencées 58a et 58b, illustrées à la figure 10. Les deux hélices s'étendent coaxialement par référence à un axe commun 60, l'hélice avant 58a s'étendant devant l'hélice arrière 58b. Les deux hélices sont chacune munies de pales 61. Elles sont aptes à tourner dans des sens de rotation respectivement opposés. Chaque moteur 56 est relié au fuselage 54 au moyen d'un mat (ou pylône) 62 respectif.

On considère ici un repère XZY tel qu'illustré sur la figure 7 et fixe par rapport au fuselage 54. La direction Y est parallèle à la fibre moyenne du mat 62 et passe par cette dernière. La direction X est horizontale et parallèle à la direction longitudinale du fuselage 54 et la direction Z est perpendiculaire aux directions X et Y. On supposera ici que les axes longitudinaux du fuselage et des moteurs sont parallèles. Lors d'une application industrielle, ces axes pourront être différents. On pourra choisir alors l'une ou l'autre des références.

On considère que le moteur 56 fonctionne à une vitesse de rotation donnée constante.

Les vibrations de balourd inertiel apparaissant dans le moteur 56 ne sont pas toutes transmises dans le mat de la même façon. En effet, en fonction de l'orientation des forces de balourd suivant les axes X, Y et Z, les vibrations seront plus ou moins bien transmises par le mat jusqu'au fuselage 54.

En l'espèce, on sélectionne tout d'abord la direction dans laquelle les vibrations apparaissant dans le moteur sont le moins bien transmises jusqu'au fuselage 54. Il s'agit de la direction de plus faible transmissibilité. Cette direction 63 correspond en l'espèce à la direction Z du repère XYZ. Cette sélection est faite par exemple par modélisation et analyse numérique.

Ensuite, lors du fonctionnement de l'aéronef, on commande le synchrophasage des deux rotors du moteur 56 de sorte que le grand axe 68 de l'ellipse de balourds de ce moteur s'étend dans la direction Z.

Ainsi, au sein du fuselage 54, par exemple à un emplacement déterminé de ce dernier, les vibrations générées par le moteur 56 ont une intensité minimale puisqu'elles ont été faiblement transmises par le mat.

On effectue la même analyse de direction de transmissibilité sur l'autre moteur 56 et on commande ce dernier de façon analogue de sorte que l'ellipse correspondante ait son grand axe orienté dans la direction dans laquelle les vibrations sont le moins bien transmises à partir de cet autre moteur jusqu'au fuselage 54.

On voit donc que, dans ce mode de réalisation, on traite chaque moteur 56 indépendamment l'un de l'autre afin de minimiser les vibrations que chacun transmet jusqu'au fuselage.

En référence à la figure 8, dans un deuxième mode de réalisation, pour choisir la direction du grand axe 68 de l'ellipse du moteur 156 situé à droite sur la figure, on prend cette fois en compte les vibrations perçues par un capteur tel qu'un accéléromètre 165 disposé à un emplacement prédéterminé de l'aéronef. Dans le présent exemple, ce capteur est situé à l'extrémité du mat 62 contiguë au fuselage 54. Au moyen de ce capteur, on détermine pour quelle direction du grand axe 68 les vibrations mesurées par le capteur sont les plus faibles.

Cette détermination peut avoir lieu lors d'essais préalables du moteur lorsque l'aéronef est à l'arrêt. Dans une variante, elle peut avoir lieu lorsque l'aéronef est en vol, par exemple en exploitation commerciale. Dans une autre variante encore, au moins une première détermination a lieu lors d'essais préalables du moteur lorsque l'aéronef est à l'arrêt, puis au moins une autre a lieu lorsque l'aéronef est en vol, par exemple en exploitation commerciale, par exemple pour rafraîchir la détermination de la meilleure orientation.

Ensuite, lors de la commande du synchrophasage, on positionne le grand axe 68 dans cette direction. Ainsi, on réduit au minimum la transmission des vibrations jusqu'au fuselage 54.

On opère de même pour l'autre moteur 156 situé à gauche sur la figure 8 au moyen d'un autre capteur placé sur le mat correspondant. De préférence, un processus de minimisation de chacun des balourds aura été conduit avant la mise en oeuvre du synchrophasage.

Ainsi, dans ce mode de réalisation, on identifie deux angles $\theta1$ et $\theta2$ indiquant l'inclinaison du grand axe de l'ellipse des moteurs respectifs par rapport à une direction fixe de la structure porteuse, par exemple la direction verticale. Il est tout à fait possible que ces deux angles aient des valeurs différentes. Sur le dessin, on observe ainsi que le grand axe associé au moteur situé à gauche sur la figure est plus incliné par rapport à la direction verticale que celui du moteur situé à droite. Tout comme dans le précédent mode de réalisation, on agit à la source pour réduire les vibrations perçues au sein du fuselage 54.

Dans un troisième mode de réalisation également décrit en référence à la figure 8, on analyse des vibrations vues depuis le fuselage au moyen d'un seul capteur pour les deux moteurs. On positionne ainsi cette fois un capteur 267 à un endroit prédéterminé tel qu'une zone critique du fuselage, par exemple en partie basse de la cabine destinée à recevoir des sièges de passager. On recherche ensuite quelle combinaison des angles $\theta1$ et $\theta2$ des grands axes 68 des ellipses permet d'obtenir le niveau le plus bas de vibrations mesurées par le capteur 267. Ici encore, il peut s'agir de valeurs de $\theta1$ et $\theta2$ différentes l'une de l'autre, y compris en valeur absolue. On sélectionne ainsi la meilleure combinaison des angles $\theta1$ et $\theta2$. Ensuite, lors du synchrophasage, on fait en sorte que les grands axes des ellipses présentent ces inclinaisons préférées.

De façon analogue au deuxième mode de réalisation, la détermination des angles $\theta1$ et $\theta2$ peut avoir lieu lors d'essais préalables du moteur lorsque l'aéronef est à l'arrêt. Dans une variante, elle peut avoir lieu lorsque l'aéronef est en vol, par exemple en exploitation commerciale. Dans une autre variante encore, au moins une première détermination a lieu lors d'essais préalables du moteur lorsque l'aéronef est à l'arrêt, puis au moins une autre a lieu lorsque l'aéronef est en vol, par exemple en exploitation commerciale, par exemple pour rafraîchir la détermination.

Dans un autre mode de réalisation, on choisit une combinaison des angles $\theta1$ et $\theta2$ pour laquelle celles des forces de balourd qui génèrent des secousses, les forces oscillatoires, sont orientées parallèlement à l'un des principaux plans d'inertie de la structure porteuse, par exemple dans ce plan. Les plans d'inertie seront par exemple des plans de symétrie de la structure porteuse. Cette dernière sera l'aéronef dans son ensemble ou bien la structure portant localement le moteur, telle que le mat. De la sorte, on limite grandement l'impact des vibrations apparaissant dans les deux moteurs. En effet, la structure est peu sensible aux vibrations s'exerçant dans un tel plan ou parallèlement à ce plan. Il peut exister plusieurs combinaisons des angles $\theta1$ et $\theta2$ qui conviennent. On pourra choisir également le plan de plus faible inertie du mât (qui pourra par exemple comprendre la direction de faible transmissibilité). Dans ce cas, les vibrations seront minimisées dans le reste de l'aéronef. On pourra d'ailleurs déterminer la direction de plus faible transmissibilité à partir de la détermination de ce plan de plus faible inertie du mat.

Pour les structures fortement dissymétriques (comme certains mats), on pourra choisir celui des plans d'inertie qui présente le plus grand module d'inertie. Ce sera le cas par exemple dans les aéronefs ayant un système de propulsion porté par un mat radial.

Dans un autre mode de réalisation, on oriente les grands axes 68 des ellipses des moteurs 156 de sorte que les forces de secousses et les moments des deux moteurs agissent dans la même direction ou les mêmes directions mais en sens opposé sur les deux moteurs afin qu'ils se compensent les uns les autres tels qu'ils sont vus depuis la structure porteuse, en particulier depuis le fuselage 54. Ce mode de réalisation sera adapté lorsque l'aéronef comprend plusieurs systèmes de propulsion installés de façon symétrique sur la structure de l'aéronef.

On a illustré à la figure 9 les deux rotors contrarotatifs 58a et 58b d'un des moteurs 56 et 156 et le principe d'une architecture de commande pour la mise en oeuvre du synchrophasage pour chacun des modes de réalisation précités. On considère ici que le rotor avant 58a est le rotor maître. Il est commandé de sorte que sa vitesse et sa puissance aient les valeurs nécessitées par le fonctionnement du moteur. Le rotor arrière 58b est ici considéré comme le rotor esclave. Sa vitesse de rotation est ajustée en continu pour réduire sa différence de vitesse de rotation avec le rotor maître. De plus, la différence de phase entre les deux rotors, c'est-à-dire l'orientation du grand axe 68 de l'ellipse, est sélectionnée comme indiqué plus haut afin de réduire les vibrations. L'invention peut également être mise en oeuvre lorsque le rotor maître est le rotor arrière tandis que le rotor avant est esclave.

On cherche d'abord à donner aux deux rotors la même vitesse de rotation. Pour cela, les vitesses de rotation respectives des deux rotors sont mesurées au moyen de tachymètres 71 fixés aux deux rotors. Les informations relevées par les tachymètres sont transmises à un module 73 de commande de vitesse qui calcule la différence de vitesse de rotation à partir du calcul de la différence entre les entrées fournies par les deux tachymètres. Le module 73 peut incorporer, comme en l'espèce, un algorithme de compensation dynamique approprié afin de générer un signal correctif qui est transmis à un amplificateur de puissance de signal 75. Le signal sortant de ce dernier est transmis à une unité 77 de commande du pas du rotor arrière 58b, lequel commande ce rotor. A cette fin, en fonction de l'application, la commande pourra avoir lieu sous la forme d'un débit de carburant ou au moyen d'un système de commande du pas, voire des deux combinés. On ajuste ainsi la vitesse du rotor arrière pour la rapprocher autant que possible de celle du rotor avant.

On cherche ensuite à ajuster la différence de phase angulaire entre les deux rotors afin de régler l'orientation du grand axe de l'ellipse par rapport au repère fixe, par exemple le repère lié à la structure porteuse. Pour cela, un capteur 83 sensible aux vibrations est placé à proximité du moteur et les valeurs d'intensité de vibration qu'il relève sont transmises à un module 79 d'échantillonnage et de temporisation qui les transmet au module 73 afin qu'elles soient également prises en compte. Les données émanant du tachymètre 31 associé au rotor arrière esclave 58b sont par ailleurs transmises à un générateur d'impulsions 81 également relié au module 79.

Ainsi, on mesure et on ajuste les vitesses de rotation des rotors et leur différence de phase. Il reste à déterminer l'angle commandant la direction optimale du grand axe de lellipse. Cet angle est calculé par le module 73. Ce calcul est effectué au moyen des principes présentés plus haut. Le synchrophasage est ensuite mis en oeuvre en tenant compte de cette valeur.

Dans les modes de réalisation où des capteurs de vibrations sont utilisés, il n'est pas nécessaire de procéder au calcul des vecteurs de force de balourd.

On a présenté ci-dessus des cas où l'on tient compte seulement des balourds d'inertie. On pourrait de façon analogue ne tenir compte que des balourds aérodynamiques. Enfin, pour un des moteurs au moins, on peut tenir compte à la fois des balourds d'inertie et des balourds aérodynamiques de ce moteur. Pour cela, on déterminera l'angle $\theta1i$ de l'ellipse des balourds d'inertie et l'angle $\theta1a$ de l'ellipse des balourds aérodynamiques. On procédera ensuite à la sélection d'une phase ou angle $\theta1$ optimal, intermédiaire entre ces deux solutions de phase constituées par la solution de phase d'inertie et la solution de phase aérodynamique. On commandera alors le moteur pour orienter le grand axe des ellipses dans cette direction intermédiaire. On limite ainsi les vibrations produites dans la structure porteuse de l'aéronef. En particulier, le moment situé hors du plan et généré par les forces radiales et le bras de levier entre les deux disques peut être utilisé pour compenser le moment généré hors du plan par le balourd aérodynamique (dû aux forces parallèles à l'axe s'exerçant sur les deux disques à un point décalé par rapport à leur centre de rotation).

On a illustré sur la figure 10 un mode de réalisation de l'architecture de commande utilisée dans le cas de l'invention pour la commande d'un seul moteur, que l'aéronef comprenne ce seul moteur ou bien qu'il comprenne deux moteurs commandés individuellement.

A chaque moteur sont associés des accéléromètres 74 de mat, répartis sur le mat 62. Ils sont ici au nombre de trois, deux accéléromètres s'étendant à proximité d'un bord avant du mat et un accéléromètre s'étendant à proximité du bord arrière.

L'aéronef comprend des moyens de commande 76 formés en l'espèce par une unité de type EEC (Electronic Engine Controller ou commande électronique de moteur). L'unité 76 est connectée par des lignes 80 à des organes classiques des hélices par lesquels l'unité reçoit des informations sur la position de l'hélice en degrés et sa vitesse en tours par minute. L'unité 76 reçoit également par des lignes respectives 82, 84, 86 et 88 des données relatives à l'air, à la demande de prélèvement d'air, à la demande de poussée et à l'aéronef en régime de croisière.

L'aéronef comprend enfin une unité de synchrophasage 90 constituant en l'espèce le module 73 de la figure 9. Elle est connectée par des lignes 92 aux trois accéléromètres respectifs 74 afin de recevoir des données d'accélération de ces derniers reflétant les vibrations parcourant le mat 62. L'unité 90 est également connectée par une ligne 94 à l'unité de commande 76 afin de recevoir des données de position et de vitesse concernant chacune des hélices 58a et 58b. Une ligne 96 permet à l'unité de synchrophasage de transmettre aux moyens de commande 76 des consignes de vitesse de l'hélice avant et de l'hélice arrière.

L'unité 76 est apte à commander un flux dans un circuit de carburant afin de régler la phase de chaque hélice. Ainsi, l'unité 76 tient compte des données reçues pour commander le flux de carburant dans le moteur, le pas du propulseur avant et celui du propulseur arrière, par la ligne 77 la reliant au moteur.

Les unités 76 et 90 forment chacune des moyens de commande électronique à microprocesseur comprenant au moins un programme enregistré sur un support d'enregistrement de données tel qu'un disque dur ou une mémoire flash. Au moins l'un des programmes comprend des instructions de code aptes à commander la mise en oeuvre de tout ou partie du procédé selon l'invention lorsqu'il est exécuté sur ces moyens formant ordinateur.

Les lignes 82, 84, 86, 88, 94 et 96 font partie du réseau de communication de données à bord de l'aéronef. Il s'agit par exemple d'un réseau de type AFDX (Avionics Full Duplex Switch).

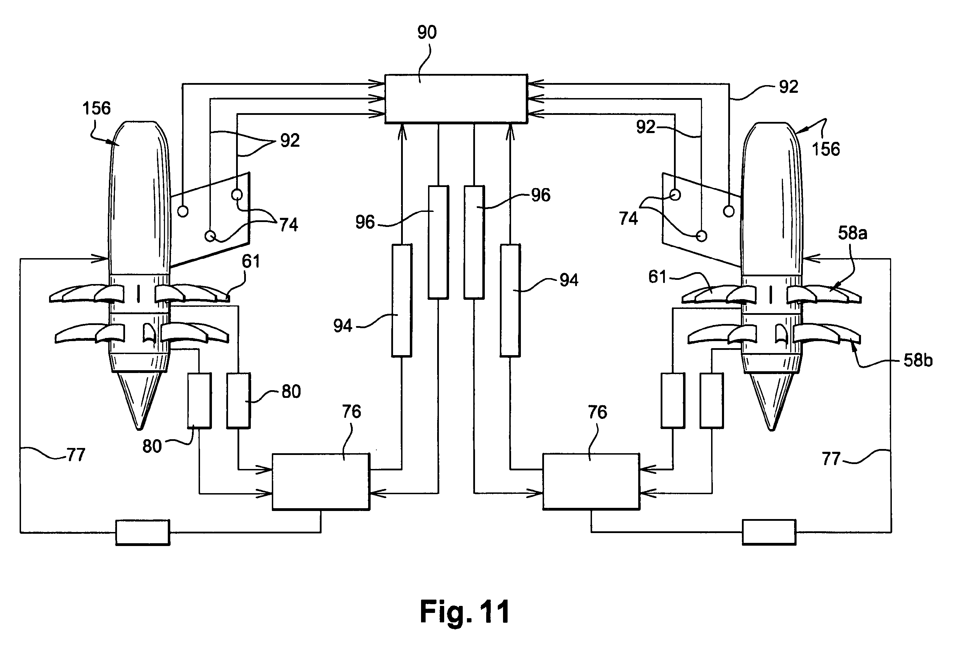

Enfin, on a illustré à la figure 11 un mode de réalisation de l'architecture de commande de deux moteurs d'un aéronef selon l'invention lorsque ceux-ci sont pilotés conjointement. On retrouve les constituants de la figure 10 de sorte que ces derniers ne seront pas décrits à nouveau. L'unité de synchrophasage 90 est ici commune aux deux moteurs 156, tandis que chaque moteur a sa propre unité de commande 76 qui reçoit les données déjà présentées et qui n'ont pas toutes été illustrées. Les deux lignes 94 des moteurs respectifs aboutissent à l'unité 90 tandis que les deux lignes 96 des moteurs respectifs en partent pour aboutir aux unités 76 respectives. L'unité 90 assure le synchrophasage des deux moteurs conformément à l'invention et transmet les commandes nécessaires aux deux unités de commande 76.

On observe que l'invention permet de confiner les vibrations dans la zone de la source qui les produit. L'invention tire parti du comportement intrinsèque naturel de la structure de l'aéronef pour amortir les vibrations générées par les moteurs. En particulier, dans la mesure du possible, l'invention vise à optimiser la direction des vibrations et à orienter les vibrations dans la direction préférée pour en minimiser l'effet, notamment au sein du fuselage. Il s'ensuit que la structure porteuse principale encaisse moins d'énergie au total que dans l'art antérieur. L'amortissement est effectif et met en oeuvre un nombre peu élevé de capteurs.

Bien entendu, on pourra apporter à l'invention de nombreuses modifications sans sortir du cadre de celle-ci.

La direction de plus faible transmissibilité pourra être différente de la direction Z à laquelle elle correspond sur la figure 7. Elle dépendra de l'architecture de l'aéronef.

L'invention est applicable aux moteurs comprenant plus de deux pièces tournantes indépendantes les unes des autres

## Revendications

1. Aéronef (50; 150) comprenant au moins un moteur (56; 156) présentant au moins un balourd, **caractérisé en ce que** le ou chaque moteur est à rotors contrarotatifs (58a, 58b), le moteur ou au moins l'un des moteurs présentant des balourds associés à au moins une ellipse (70), l'aéronef comprenant des moyens (73, 90) aptes à commander le moteur ou au moins l'un des moteurs en donnant aux rotors la même vitesse de rotation et une différence de phase de sorte que, à une vitesse donnée du moteur, le grand axe (68) de l'ellipse ou de l'une au moins des ellipses s'étend dans une direction pour laquelle des vibrations générées par le ou les moteurs ont une intensité minimale à au moins un emplacement prédéterminé, notamment dans une zone prédéterminée, de l'aéronef.

2. Aéronef (150) selon la revendication précédente dans lequel les moyens de commande (73, 90) sont aptes à commander le moteur (56) ou l'un au moins des moteurs de sorte que le grand axe (68) de l'ellipse ou de l'une au moins des ellipses s'étend dans une direction (Z) de plus faible transmissibilité des vibrations dans une structure portant le moteur.

3. Aéronef (150) selon au moins l'une quelconque des revendications précédentes dans lequel les moteurs (156) sont au nombre de deux au moins et les moyens de commande (73, 90) sont aptes à commander les moteurs de sorte qu'une résultante des vibrations générées par les moteurs a une intensité minimale à l'emplacement prédéterminé (267).

4. Aéronef (150) selon au moins l'une quelconque des revendications précédentes dans lequel les moteurs (156) sont au nombre de deux au moins et les moyens de commande (73, 90) sont aptes à commander au moins l'un des moteurs de sorte que des vibrations générées par le moteur en propre ont une intensité minimale à l'emplacement (165),

**5.** Aéronef (150) selon la revendication précédente dans lequel l'emplacement est propre au moteur et les moyens de commande (73, 90) sont aptes à commander l'autre moteur de sorte que l'autre moteur est associé à au moins un autre emplacement prédéterminé auquel des vibrations générées par cet autre moteur en propre ont une intensité minimale.

**6.** Aéronef selon au moins l'une quelconque des revendications précédentes dans lequel les moyens de commande (73, 90) sont aptes à commander le moteur (156) ou l'un au moins des moteurs de sorte que des forces de balourd des rotors s'exercent parallèlement à un plan d'inertie d'une structure portant le moteur, par exemple un plan d'inertie principal ou celui des plans d'inertie qui a le plus grand module d'inertie.

**7.** Aéronef selon au moins l'une quelconque des revendications précédentes dans lequel les moteurs (156) sont au nombre de deux au moins et les moyens de commande (73, 90) sont aptes à commander les moteurs de sorte que des forces de balourd et/ou des moments de balourd des moteurs respectifs s'exerçant sur l'aéronef se compensent au moins partiellement.

**8.** Procédé de commande d'un aéronef (50 ; 150) comprenant au moins un moteur (56 ; 156) à rotors contrarotatifs (58a, 58b), le ou au moins l'un des moteurs présentant des balourds associés à au moins une ellipse (70), procédé dans lequel on commande le moteur ou au moins l'un des moteurs en donnant aux rotors la même vitesse de rotation et une différence de phase de sorte que, à une vitesse donnée du moteur, le grand axe (68) de l'ellipse ou de l'une au moins des ellipses s'étend dans une direction pour laquelle des vibrations générées par le ou les moteurs ont une intensité minimale à au moins un emplacement prédéterminé, notamment dans une zone prédéterminée, de l'aéronef.

**9.** Programme d'ordinateur **caractérisé en ce qu'**il comprend des instructions aptes à commander l'exécution d'un procédé selon la revendication précédente lorsqu'il est exécuté sur un ordinateur.

**10.** Support d'enregistrement de données **caractérisé en ce qu'**il comprend un programme selon la revendication précédente.

**Claims**

**1.** An aircraft (50; 150) including at least one engine (56; 156) having at least one imbalance, the aircraft being **characterized in that** the or each engine has counter-rotating rotors (58a, 58b), the engine or at least one of the engines having imbalances associated with at least one ellipse (70), the aircraft comprising means (73, 90) capable of controlling the engine or at least one of the engines by imparting the same speed of rotation and a phase difference to the rotors such that, at a given engine speed, the major axis (68) of the ellipse or at least one of the ellipses extends in a direction for which vibrations generated by the engine or engines have a minimum intensity in at least one predetermined site, particularly in a predetermined area, of the aircraft.

**2.** An aircraft (150) according to the preceding claim, wherein the control means (73, 90) are able to control the engine (56) or at least one of the engines such that the major axis (68) of the ellipse or at least one of the ellipses extends in a direction (Z) of lower vibration transmissivity in a structure supporting the engine.

**3.** An aircraft (150) according to either preceding claim, wherein there are at least two engines (156) and the control means (73, 90) are able to control the engines such that a resultant of the vibrations generated by the engines has minimum intensity at the predetermined site (267).

**4.** An aircraft (150) according to at least any one of the preceding claims, wherein there are at least two engines (156) and the control means (73, 90) are able to control at least one of the engines such that vibrations generated by the engine itself have minimum intensity at the site (165).

**5.** An aircraft (150) according to the preceding claim, wherein the site is specific to the engine and the control means (73, 90) are able to control the other engine such that the other engine is associated with at least one other predetermined site at which the vibrations generated by this other engine itself have minimum intensity.

**6.** An aircraft according to at least any one of the preceding claims, wherein the control means (73, 90) are able to control the engine (156) or at least one of the engines such that imbalance forces of the rotors are exerted parallel to an inertia plane of a structure supporting the engine, for example a main inertia plane or the inertia plane which has the largest inertia modulus.

7. An aircraft according to any one of the preceding claims, wherein there are at least two engines (156) and the control means (73, 90) are able to control the engines such that imbalance forces and/or imbalance moments of the respective engines exerted on the aircraft compensate each other at least partially.

8. A method of controlling an aircraft (50; 150) including at least one engine (56; 156) having counter-rotating rotors (58a, 58b), the engine or at least one of the engines having imbalances associated with at least one ellipse (70), method wherein the engine or at least one of the engines is controlled by imparting the same speed of rotation and a phase difference to the rotors such that, at a given engine speed, the major axis (68) of the ellipse or at least one of the ellipses extends in a direction for which vibrations generated by the engine or engines have a minimum intensity in at least one predetermined site, particularly in a predetermined area, of the aircraft.

9. A computer program **characterized in that** it includes instructions capable of controlling execution of a method according to the preceding claim when executed on a computer.

10. A data storage medium, **characterized in that** it includes a program according to the preceding claim.

## Patentansprüche

1. Flugzeug (50; 150) aufweisend mindestens ein Triebwerk (56; 156), das mindestens eine Unwucht aufweist, **dadurch gekennzeichnet, dass** das oder jedes Triebwerk ein Triebwerk mit gegenläufigen Rotoren (58a, 58b) ist, wobei das Triebwerk oder mindestens eines der Triebwerke Unwuchten aufweist, die mindestens einer Ellipse (70) zugeordnet sind, wobei das Flugzeug Mittel (73, 90) aufweist, die dafür geeignet sind, das Triebwerk oder mindestens eines der Triebwerke zu steuern, indem den Rotoren dieselbe Drehzahl und eine Phasendifferenz verliehen wird, so dass sich, bei einer bestimmten Drehzahl des Triebwerks, die große Achse (68) der Ellipse oder mindestens einer der Ellipsen in einer Richtung erstreckt, bei der durch das Triebwerk oder die Triebwerke erzeugte Schwingungen an mindestens einer vorbestimmten Stelle, insbesondere in einer vorbestimmten Zone, des Flugzeugs eine minimale Stärke aufweisen.

2. Flugzeug (150) nach dem vorhergehenden Anspruch, wobei die Steuermittel (73, 90) dafür geeignet sind, das Triebwerk (56) oder mindestens eines der Triebwerke zu steuern, so dass sich die große Achse (68) der Ellipse oder mindestens einer der Ellipsen in einer Richtung (Z) mit der geringsten Durchlässigkeit der Schwingungen in eine das Triebwerk tragende Struktur erstreckt.

3. Flugzeug (150) nach mindestens einem der vorhergehenden Ansprüche, wobei die Triebwerke (156) in einer Anzahl von mindestens zwei vorhanden sind und die Steuermittel (73, 90) dafür geeignet sind, die Triebwerke zu steuern, so dass eine Resultierende der durch die Triebwerke erzeugten Schwingungen an der vorbestimmten Stelle (267) eine minimale Stärke aufweist.

4. Flugzeug (150) nach mindestens einem der vorhergehenden Ansprüche, wobei die Triebwerke (156) in einer Anzahl von mindestens zwei vorhanden sind und die Steuermittel (73, 90) dafür geeignet sind, mindestens eines der Triebwerke zu steuern, so dass die durch das Triebwerk selbst erzeugten Schwingungen an der Stelle (165) eine minimale Stärke aufweisen.

5. Flugzeug (150) nach dem vorhergehenden Anspruch, wobei die Stelle dem einen Triebwerk zugehörig ist und die Steuermittel (73, 90) dafür geeignet sind, das andere Triebwerk zu steuern, so dass das andere Triebwerk mindestens einer anderen vorbestimmten Stelle zugeordnet ist, an der die durch dieses andere Triebwerk selbst erzeugten Schwingungen eine minimale Stärke aufweisen.

6. Flugzeug nach mindestens einem der vorhergehenden Ansprüche, wobei die Steuermittel (73, 90) dafür geeignet sind, das Triebwerk (156) oder mindestens eines der Triebwerke zu steuern, so dass Unwuchtkräfte der Rotoren parallel zu einer Trägheitsebene einer das Triebwerk tragenden Struktur wirken, zum Beispiel einer Hauptträgheitsebene oder derjenigen der Trägheitsebenen, die das größte Trägheitsmodul aufweist.

7. Flugzeug nach mindestens einem der vorhergehenden Ansprüche, wobei die Triebwerke (156) in einer Anzahl von mindestens zwei vorhanden sind und die Steuermittel (73, 90) dafür geeignet sind, die Triebwerke zu steuern, so dass sich Unwuchtkräfte und/oder Unwuchtmomente der jeweiligen Triebwerke, die auf das Flugzeug wirken, zumindest zum Teil kompensieren.

8. Verfahren zum Steuern eines Flugzeugs (50; 150) umfassend mindestens ein Triebwerk (56; 156) mit gegenläufigen Rotoren (58a, 58b), wobei das Triebwerk oder mindestens eines der Triebwerke Unwuchten aufweist, die mindestens einer Ellipse (70) zugeordnet sind, wobei bei diesem Verfahren das Triebwerk oder mindestens eines der Triebwerke gesteuert wird, indem den Rotoren dieselbe Drehzahl und eine Phasendifferenz verliehen wird, so dass sich, bei einer bestimmten Drehzahl des Triebwerks, die große Achse (68) der Ellipse oder mindestens einer der Ellipsen in einer Richtung erstreckt, bei der durch das Triebwerk oder die Triebwerke erzeugte Schwingungen an mindestens einer vorbestimmten Stelle, insbesondere in einer vorbestimmten Zone, des Flugzeugs eine minimale Stärke aufweisen.

9. Computerprogramm **dadurch gekennzeichnet, dass** es Anweisungen umfasst, die dafür geeignet sind, die Ausführung des Verfahrens nach dem vorhergehenden Anspruch zu steuern, wenn es in einem Computer ausgeführt wird.

10. Datenaufzeichnungsträger **dadurch gekennzeichnet, dass** er ein Programm nach dem vorhergehenden Anspruch umfasst.

**Fig. 1**

**Fig. 2**

**Fig. 3**

Fig. 4

Fig. 5

Fig. 6

**Fig. 7**

**Fig. 8**

**Fig. 9**

**Fig. 10**

**Fig. 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006017201 A
- US 4689821 A
- US 20050065712 A
- WO 2005042959 A
- US 005221185 A
- US 5490436 A
- EP 1296082 A